# EUROPÄISCHE PATENTSCHRIFT

(11) **EP 3 964 403 B1**
(45) Veröffentlichungstag und Bekanntmachung des Hinweises auf die Patenterteilung: **14.06.2023**
(21) Anmeldenummer: 21192266.1
(22) Anmeldetag: 20.08.2021
(51) Int. Cl.: B60R 16/03

(54) **VERFAHREN UND STEUERVORRICHTUNG ZUR REDUZIERUNG VON BETRIEBSSTUNDEN VON ELEKTRISCHEN VERBRAUCHERN EINES BORDNETZES**
METHOD AND CONTROL DEVICE FOR REDUCING OPERATING HOURS OF ELECTRICAL CONSUMERS OF AN ON-BOARD NETWORK
PROCÉDÉ ET DISPOSITIF DE COMMANDE DESTINÉS À LA RÉDUCTION DES HEURES DE FONCTIONNEMENT DES CONSOMMATEURS ÉLECTRIQUES D'UN RÉSEAU DE BORD

(30) Priorität: 03.09.2020 DE 102020123044
(43) Veröffentlichungstag der Anmeldung: 09.03.2022
(73) Patentinhaber: MAN Truck & Bus SE, 80995 München (DE)
(72) Erfinder: Braun, Reimar, 81735 München (DE)
(74) Vertreter: v. Bezold & Partner Patentanwälte - PartG mbB

(56) Entgegenhaltungen:
- WO-A1-2015/110591
- WO-A1-2018/116480
- DE-A1-102015 114 797
- US-A1- 2018 086 290

## Beschreibung

Die Erfindung betrifft ein Verfahren und eine Steuervorrichtung zur Reduzierung von Betriebsstunden von elektrischen Verbrauchern eines Kraftfahrzeugs, sowie ein Kraftfahrzeug mit einer solchen Steuervorrichtung.

Die DE 10 2015 114797 offenbart ein Verfahren zur Reduzierung von Betriebsstunden von elektrischen Verbrauchern eines Bordnetzes eines Kraftfahrzeugs, wobei die elektrischen Verbraucher unterteilt sind in zumindest eine erste Verbrauchergruppe und eine zweite Verbrauchergruppe.

Aus dem Stand der Technik ist bekannt, dass beim Verbinden eines Kraftfahrzeug-Bordnetzes mit einer Fahrzeugbatterie, z. B. durch einen Klemme-15-Wechsel, sämtliche am Bordnetz angeschlossenen elektrischen Verbraucher mit elektrischen Energie versorgt werden (d. h. bestromt werden).

Dies führt insbesondere bei Nutzfahrzeugen zu einer hohen Anzahl an Betriebsstunden der elektrischen Verbraucher innerhalb einer Woche, eines Monats, usw., da es heutzutage üblich ist, dass die Fernfahrer u.a. auch am Wochenende auf Raststätten im Fahrerhaus Leben oder dieses als Büro nutzen. Auch in dieser Zeit wird das Bordnetz und somit sämtliche Verbraucher üblicherweise bestromt, um z. B. ein Infotainmentsystem oder die Innenbeleuchtung nutzen zu können.

Die Anzahl an Betriebsstunden ist ein entscheidender Faktor für die Lebensdauer der elektrischen Verbraucher. Zudem hat insbesondere die Anzahl der Einschaltvorgänge der elektrischen Verbraucher durch einen Klemme-15-Wechsel und die dazu notwendige Aktivierungsenergie einen wesentlichen Einfluss auf die Lebensdauer.

Bisher ist es üblich, elektrische Verbraucher in Nutzfahrzeugen zu verbauen, die speziell für die Verwendung in Nutzfahrzeugen ausgelegt sind. Dies führt jedoch zu hohen Entwicklungs- und Produktionskosten der elektrischen Verbraucher.

Aus Kostengründen werden daher auch in Nutzfahrzeugen verstärkt PKW-Komponenten (d. h. elektrische Verbraucher, die für PKW entwickelt und produziert werden) eingesetzt, deren Lebensdauer nicht auf Nutzfahrzeuge ausgelegt ist. Entsprechend kürzere Lebensdauern können zu einem häufigeren Austausch dieser elektrischen Verbraucher führen, was vermieden werden soll.

Daher besteht Bedarf für eine kostengünstigere Lösung, die Lebensdauer für zumindest ein Teil der in Kraftfahrzeugen, vorzugsweise Nutzfahrzeugen, verbauten elektrischen Verbraucher zu verlängern.

Der Erfindung liegt somit die Aufgabe zu Grunde, ein Verfahren und eine Steuervorrichtung zur Erhöhung der Lebensdauer von elektrischen Verbrauchern eines Bordnetzes eines Kraftfahrzeugs bereitzustellen.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird ein Verfahren zur Reduzierung von Betriebsstunden von elektrischen Verbrauchern eines Kraftfahrzeugs, vorzugsweise eines Bordnetzes eines Kraftfahrzeugs bereitgestellt. Das Kraftfahrzeug ist vorzugsweise ein Nutzfahrzeug.

Die elektrischen Verbraucher sind unterteilt in zumindest eine erste Verbrauchergruppe, die Verbraucher enthält, die für einen Fahrbetrieb des Kraftfahrzeugs erforderlich und für einen Nicht-Fahrbetrieb des Kraftfahrzeugs nicht erforderlich sind, und eine zweite Verbrauchergruppe, die Verbraucher enthält, die im Rahmen eines Aufenthalts im Kraftfahrzeug während eines Nicht-Fahrbetriebs des Kraftfahrzeugs genutzt werden können. Das Verfahren umfasst ein Erfassen eines Betriebssignals, das eine bevorstehende Nutzung des Kraftfahrzeugs signalisiert. Das Verfahren umfasst ferner ein Erkennen, ob eine Fahrbetriebs-Nutzungssituation oder eine Nicht-Fahrbetriebs-Nutzungssituation des Kraftfahrzeugs, bei der das Kraftfahrzeug im Nicht-Fahrbetrieb zum Aufenthalt genutzt wird, bevorsteht. Das Verfahren umfasst ferner, dass, falls eine Nicht-Fahrbetriebs-Nutzungssituation erkannt wird, keine elektrische Aktivierung der Verbraucher der ersten Verbrauchergruppe erfolgt (durchgeführt wird).

Vorteilhaft können die Betriebsstunden von elektrischen Verbrauchern der ersten Verbrauchergruppe, die von einem Nutzer während eines Nicht-Fahrbetriebs nicht genutzt werden, effektiv reduziert und damit deren Lebensdauern verlängert werden. Zusätzlich kann durch das Verfahren auch die Anzahl der Ein- und Ausschaltvorgänge für diese elektrischen Verbraucher der ersten Verbrauchergruppe reduziert werden, was zusätzlich zu einer Verlängerung deren Lebensdauern beiträgt.

Eine Nicht-Fahrbetriebs-Nutzungssituation kann bevorstehen, wenn sich der Fahrer über einen längeren Zeitraum in einem Innenraum eines geparkten Kraftfahrzeugs, insbesondere einem Fahrerhaus eines geparkten Nutzfahrzeugs, aufhalten und diesen als Wohn- und Schlafraum oder als Büro nutzen möchte. Ein Antriebsmotor des Kraftfahrzeugs befindet sich dabei vorzugsweise im Stillstand. Die Nicht-Fahrbetriebs-Nutzungssituation kann insbesondere dann bevorstehen, wenn der Fahrer eines Nutzfahrzeugs aufgrund eines Erreichens der maximalen Tages- und/oder Wochenlenkzeit eine gesetzlich vorgeschriebene Ruhezeit einhalten muss, oder der Fahrer das gesetzlich vorgeschriebene Sonn- und Feiertagsfahrverbot einhalten muss. Die Fahrbetriebs-Nutzungssituation kann insbesondere dann bevorstehen, wenn das Betriebssignal, das eine bevorstehende Nutzung des Kraftfahrzeugs signalisiert, nach einer Fahrtunterbrechung, z.B. einer Tankpause, einer Mittagspause oder nach einem Be- bzw. Entladen des Nutzfahrzeugs erfasst wurde. Das Erkennen, ob nach Erfassen des Betriebssignals eine Fahrbetriebs-Nutzungssituation oder eine Nicht-Fahrbetriebs-Nutzungssituation des Kraftfahrzeugs bevorsteht, kann automatisch anhand zuvor im Kraftfahrzeug, z. B. einem Fahrzeugrechner, hinterlegter Kriterien oder Algorithmen erfolgen und/oder kann anhand einer entsprechenden Benutzereingabe festgelegt werden.

Das erfindungsgemäße Verfahren zeichnet sich somit dadurch aus, dass nach dem Erfassen eines Betriebssignals, das eine bevorstehende Nutzung des Kraftfahrzeugs signalisiert, nicht automatisch immer alle elektrischen Verbraucher des elektrischen Bordnetzes elektrisch aktiviert, d. h. unter Spannung gesetzt und bestromt werden. Stattdessen wird eine Gruppe elektrischer Verbraucher, die nur für den Fahrbetrieb erforderlich sind, nicht jedoch für einen Aufenthalt im Fahrzeug während eines Nicht-Fahrbetriebes, bei Erkennung einer Nicht-Fahrbetriebs-Nutzungssituation und nach Erfassen des Betriebssignals elektrisch nicht aktiviert. Diese Verbraucher werden selektiv nur dann aktiviert, wenn nach dem Erfassen eines Betriebssignals zusätzlich erkannt wird, dass eine Fahrbetriebs-Nutzungssituation bevorsteht.

Die elektrischen Verbraucher der ersten und zweiten Verbrauchergruppe umfassen elektrische Verbraucher, die nicht permanent mit einer elektrischen Spannungsquelle, beispielsweise einer Fahrzeugbatterie, verbunden sind. Das Verbinden dieser elektrischen Verbraucher mit der elektrischen Spannungsquelle erfordert eine Änderung des Betriebszustandes des Kraftfahrzeugs. Diese Zustandsänderung erfolgt z. B. durch Drehen des Zündschlüssels im Zündschloss, wodurch die sogenannte Klemme-15 (oder auch Zündungsplus genannt) geschaltet wird. Bei Kraftfahrzeugen ohne Zündschloss, z. B. Elektrofahrzeuge, können solche Zustandsänderungen beispielsweise durch entsprechende Signalisierungen, die zu einem Aufwachen des Kraftfahrzeuges führen, erfolgen.

Das erfindungsgemäße Verfahren führt zu einer Neudefinition der bisher üblichen Umsetzung des Klemme-15-Wechsels bzw. einer entsprechenden Zustandsänderung des Kraftfahrzeugs, da die elektrischen Verbraucher der ersten Verbrauchergruppe nicht mehr bei jedem Klemme-15-Wechsel, d. h. bei jeder Schaltung der Klemme-15, mit der elektrischen Spannungsquelle verbunden und damit elektrisch aktiviert werden. Stattdessen erfolgt die elektrische Aktivierung nach dem Klemme-15-Wechsel erst, falls eine bevorstehende Fahrbetriebs-Nutzungssituation erkannt wird. Entsprechend ist das Bordnetz gemäß der Erfindung derart ausgebildet, dass die elektrische Aktivierung der Verbraucher der ersten Verbrauchergruppe nicht bereits durch den Klemme-15-Wechsel erfolgt, sondern separat dazu die Möglichkeit besteht, die erste Verbrauchergruppe selektiv elektrisch zu aktivieren.

Neben den elektrischen Verbrauchern der ersten und zweiten Verbrauchergruppe kann das Bordnetz weitere elektrische Verbraucher umfassen. Beispielsweise kann das Bordnetz elektrische Verbraucher umfassen, die permanent mit der elektrischen Quelle, z. B. über eine Klemme-30 bzw. ein Dauerplus des Zündschlosses, verbunden sind.

Das Verfahren wird ausschließlich im Nicht-Fahrbetrieb des Kraftfahrzeugs ausgeführt, ein Fahrbetrieb des Kraftfahrzeugs ist ohne aktivierte elektrische Verbraucher der ersten Verbrauchergruppe nicht möglich. Für den Fahrbetrieb ist eine erneute Zustandsänderung des Kraftfahrzeugs, z. B. ein erneuter Klemmenwechsel und/oder eine entsprechende Benutzereingabe, die signalisiert, dass von einer Nicht-Fahrbetriebs-Nutzungssituation zu einer Fahrbetriebs-Nutzungssituation des Kraftfahrzeugs gewechselt werden soll, erforderlich, bei dem u.a. der Antriebsmotor gestartet wird und die Verbraucher der ersten Verbrauchergruppe elektrisch aktiviert werden.

Unter dem Betriebssignal, das eine bevorstehende Nutzung des Kraftfahrzeugs signalisiert, kann jedes hierfür geeignete Signal verstanden werden, das signalisiert oder aus dem abgeleitet werden kann, dass ein zuvor abgestelltes und auch im abgestellten Zustand nicht genutztes Kraftfahrzeug nun entweder zum Fahrbetrieb oder für den Nicht-Fahrbetrieb genutzt werden soll. Gemäß einer besonders bevorzugten Ausführungsform kann das Betriebssignal ein Klemme-15-Signal, ein "Zündung ein"-Signal oder das Anlasssignal bei einem Elektrofahrzeug sein. Das Betriebssignal kann eine Betriebszustandsänderung des Kraftfahrzeuges anzeigen. Die Betriebszustandsänderung kann umfassen, dass eine Teilmenge der elektrischen Verbraucher des Bordnetzes elektrisch aktiviert wird, wobei der Antriebsmotor des Kraftfahrzeugs im Stillstand ist.

Gemäß einer bevorzugten Variante kann das Erkennen, ob eine Nicht-Fahrbetriebs-Nutzungssituation des Kraftfahrzeugs bevorsteht, eine Benutzer-Interaktion über eine Bedienschnittstelle des Kraftfahrzeugs umfassen. Ein Nutzer kann mittels einer Bedieneingabe bestätigen, dass eine Nicht-Fahrbetriebs-Nutzungssituation des Kraftfahrzeugs bevorsteht. Die Benutzer-Interaktion kann mittels einer Anzeige- und Eingabeeinheit, beispielsweise mittels eines Displays, erfolgen. Die Bedieneingabe kann mittels einer Taste und/oder einer Schaltfläche erfolgen. Die Anzeige- und Eingabeeinheit, die Taste und/oder die Schaltfläche können im Fahrzeuginnenraum des Kraftfahrzeugs, beispielsweise an einem Armaturenbrett des Kraftfahrzeugs, angeordnet sein. Die Benutzereingabe bietet den Vorzug, dass automatische Falscheinschätzungen der bevorstehenden Nutzungssituation, z. B. anhand von Algorithmen, vermieden oder korrigiert werden können.

Gemäß einer weiteren Ausführungsform kann die Benutzer-Interaktion eine akustische und/oder visuelle Ausgabe einer Abfrage umfassen, das Bevorstehen einer Nicht-Fahrbetriebs-Nutzungssituation zu bestätigen. Die akustische Ausgabe kann über, vorzugsweise bereits vorhandene, Lautsprecher im Fahrzeuginnenraum des Kraftfahrzeugs erfolgen. Die visuelle Ausgabe kann über eine, vorzugsweise bereits vorhandene, Anzeigeeinheit erfolgen. Auch hier bietet die Abfrage den Vorteil, dass automatische Falscheinschätzungen der bevorstehenden Nutzungssituation, z. B. anhand von Algorithmen, vermieden oder durch den Benutzer korrigiert werden können.

Gemäß einer weiteren Ausführungsform kann das Erkennen, ob eine Fahrbetriebs-Nutzungssituation oder eine Nicht-Fahrbetriebs-Nutzungssituation des Kraftfahrzeugs bevorsteht, ein Erfassen eines aktuellen Standorts des Kraftfahrzeugs und ein Prüfen, ob der erfasste Standort einer für eine Nicht-Fahrbetriebs-Nutzungssituation geeigneten Standortkategorie entspricht, beispielsweise eine Raststätte oder ein Parkplatz, umfassen.

Alternativ oder ergänzend kann das Erkennen, ob eine Fahrbetriebs-Nutzungssituation oder eine Nicht-Fahrbetriebs-Nutzungssituation des Kraftfahrzeugs bevorsteht, ein Prüfen, ob in Abhängigkeit der zurückliegenden Lenkzeiten eine Ruhezeit des Fahrers wahrscheinlich ist, umfassen. Eine Ruhezeit kann wahrscheinlich sein, wenn die Summe der zurückliegenden Lenkzeiten, beispielsweise die Gesamtlenkzeit der zurückliegenden Woche, einen vorbestimmten Grenzwert überschritten hat. Der vorbestimmte Grenzwert kann von einer gesetzlich zulässigen Lenkzeit abhängen.

Der aktuelle Standort und/oder die aktuelle Standortkategorie, z.B. Parkplatz oder Raststätte, kann mittels einer Standorterfassungseinheit erfasst sein. Die Standorterfassungseinheit kann ein Navigationssystem und/ oder ein GPS-System umfassen. Die zurückliegende Lenkzeit kann mittels einer Lenkzeiterfassungseinheit erfasst sein. Die Lenkzeiterfassungseinheit kann einen Fahrtenschreiber umfassen. Der aktuelle Standort und/oder die zurückliegenden Lenkzeiten können während des Fahrbetriebs erfasst und als gespeicherte Werte in einer Speichereinheit hinterlegt sein. Das Erfassen des aktuellen Standorts und/oder der zurückliegenden Lenkzeiten können das Abrufen der gespeicherten Werte umfassen.

Vorteilhaft kann das Verfahren selbstständig, z. B. anhand im Fahrzeug hinterlegter Kriterien oder Algorithmen, feststellen, ob eine Nicht-Fahrbetriebs-Nutzungssituation des Kraftfahrzeugs bevorsteht. Sofern der aktuelle Standort und/oder die zurückliegenden Lenkzeiten während des Fahrbetriebs erfasst und hinterlegt worden sind, so kann vorteilhaft auf diese Werte zurückgegriffen werden, ohne dass die entsprechenden Erfassungseinheiten betrieben werden müssen. In diesem Fall könnten die beiden Erfassungseinheiten elektrische Verbraucher der ersten Verbrauchergruppe sein.

Gemäß einer weiteren Variante kann die Benutzer-Interaktion zusätzlich durchgeführt werden, falls die Prüfung ergeben hat, dass der Standort einer für eine Nicht-Fahrbetriebs-Nutzungssituation geeigneten Standortkategorie entspricht und/oder dass eine Ruhezeit des Fahrers wahrscheinlich ist.

Vorteilhaft kann die Anzahl der Benutzer-Interaktionen reduziert werden, indem der Fahrer nicht bei jedem Klemme-15-Wechsel gefragt wird, ob eine Nicht-Fahrbetriebs-Nutzungssituation bevorsteht, sondern erst, wenn die Kriterien gemäß dem Standort des Kraftfahrzeugs und/oder der Ruhezeit des Fahrers erfüllt worden sind.

Ferner vorteilhaft liegt die endgültige Entscheidung, ob eine Nicht-Fahrbetriebs-Nutzungssituation bevorsteht, beim Nutzer, der die anhand des aktuellen Standorts des Kraftfahrzeugs und/oder der zurückliegenden Lenkzeiten erfasste Nicht-Fahrbetriebs-Nutzungssituation bestätigen oder ablehnen kann. Beispielsweise kann in dem Fall, dass sich das Kraftfahrzeug auf einer Raststätte befindet und daher eine bevorstehende Nicht-Fahrbetriebs-Nutzungssituation erfasst worden ist, der Fahrer dies ablehnen, weil er das Kraftfahrzeug lediglich kurzzeitig für eine Fahrtunterbrechung abgestellt hat.

Gemäß einer weiteren Ausführungsvariante kann das Verfahren ferner eine elektrische Aktivierung der Verbraucher der ersten Verbrauchergruppe umfassen, falls eine Fahrbetriebs-Nutzungssituation erkannt wird. Die elektrische Aktivierung kann mittels eines elektrische Schaltelements erfolgen, das ein elektrisches Teilbordnetz, in dem die erste Verbrauchergruppe angeordnet ist, mit elektrischen Strom versorgt. Das elektrische Schaltelement kann ausgebildet sein, einen, mehrere und/oder alle elektrischen Verbraucher der ersten Verbrauchergruppe elektrisch zu aktivieren. Das elektrische Schaltelement kann jeweils einen Schalter für jeden elektrischen Verbraucher der ersten Verbrauchergruppe umfassen. Alternativ oder ergänzend kann die elektrische Aktivierung mittels eines über einen Datenbus gesendeten Aufwach-Signals (engl. CAN-Wakeup-Signal) erfolgen.

Vorteilhaft ist es möglich, die elektrischen Verbraucher der ersten Verbrauchergruppe unabhängig von den elektrischen Verbrauchern der zweiten Verbrauchergruppe elektrisch zu aktivieren. Die elektrische Aktivierung bzw. die elektrische Verbindung mit der elektrischen Quelle des Kraftfahrzeugs erfolgt somit erst durch das Schließen des elektrischen Schalterelements und/oder durch Senden der Aufwachsignale.

Die elektrische Aktivierung von elektrischen Verbrauchern mittels des elektrischen Schaltelements, d.h. über Hardware, wird insbesondere bei sicherheitskritischen bzw. verkehrssicherheitsrelevante Verbrauchern bevorzugt.

Gemäß einer weiteren Ausführungsform kann die erste Verbrauchergruppe verkehrssicherheitsrelevante Verbraucher, beispielsweise ein Notbremssystem, und Sensorelemente von Fahrerassistenzsystemen, beispielsweise Sensoren zur Umfelderfassung, umfassen. Alternativ oder ergänzend kann die zweite Verbrauchergruppe das Fahrzeugentertainment, einen Anzeigebildschirm, und/oder eine Innenbeleuchtung umfassen.

Vorteilhaft umfasst die zweite Verbrauchergruppe insbesondere elektrische Verbraucher, die der Fahrer im Fahrerhaus nutzen kann, wenn er das Fahrerhaus während einer Nicht-Fahrbetriebs-Nutzungssituation als Wohn- und Schlafraum oder als Büro nutzen möchte. Ferner vorteilhaft umfasst die erste Verbrauchergruppe insbesondere elektrische Verbraucher, die ausschließlich für einen Fahrbetrieb des Kraftfahrzeugs erforderlich sind, und so während einer Nicht-Fahrbetriebs-Nutzungssituation nicht elektrisch aktiviert und damit nicht unnötig belastet werden.

Gemäß einer weiteren Ausführungsform kann das Verfahren ein Bestimmen der Gesamtbetriebsstunden der elektrischen Verbraucher und Erfassen einer Anzahl der Aktivierungs- und Deaktivierungsvorgänge der elektrischen Verbraucher zur Bestimmung einer Abschätzung zur verbleibenden Lebensdauer für jedes der elektrischen Verbraucher umfassen.

Vorteilhaft können die Lebensdauern der elektrischen Verbraucher mit höherer Präzision abgeschätzt werden gegenüber der üblichen Lebensdauerschätzung. Bei der üblichen Lebensdauerschätzung für elektrische Verbraucher eines Nutzfahrzeugs wird die jeweilige Lebensdauer anhand der jährlichen Betriebsstunden abgeschätzt, wobei die gesetzliche Arbeitszeit eines Fahrers als Grundlage für die jährlichen Betriebsstunden dient.

Gemäß einem weiteren allgemeinen Aspekt der Erfindung wird eine Steuervorrichtung zur Reduzierung von Betriebsstunden von elektrischen Verbrauchern eines Bordnetzes eines Kraftfahrzeugs bereitgestellt. Die Steuervorrichtung ist ausgebildet, das Verfahren wie hierin offenbart durchzuführen. Die Steuervorrichtung kann ein bereits vorhandenes Steuergerät (engl. electronic control unit, ECU) des Fahrzeugs sein.

Zur Vermeidung von Wiederholungen sollen rein verfahrensgemäß offenbarte Merkmale auch als vorrichtungsgemäß in Bezug auf die Steuervorrichtung offenbart gelten und beanspruchbar sein. Die vorgenannten Aspekte und erfindungsgemäßen Merkmale, insbesondere im Hinblick auf das Erfassen des Betriebssignals, das eine bevorstehende Nutzung des Kraftfahrzeugs signalisiert, das Erkennen, ob eine Fahrbetriebs-Nutzungssituation oder eine Nicht-Fahrbetriebs-Nutzungssituation des Kraftfahrzeugs, bei der das Kraftfahrzeug im Nicht-Fahrbetrieb zum Aufenthalt genutzt wird, bevorsteht; und das selektive Aktivieren der ersten Verbrauchergruppe in Abhängigkeit der bevorstehenden Nutzungssituation, gelten somit auch als funktionale Merkmale für die Steuervorrichtung.

Beispielsweise kann die Steuervorrichtung ausgebildet sein, zur Bestimmung, ob eine Fahrbetriebs-Nutzungssituation oder eine Nicht-Fahrbetriebs-Nutzungssituation des Kraftfahrzeugs vorliegt, den aktuellen Standort mittels der Standorterfassungseinheit zu erfassen und/oder die zurückliegende Lenkzeit mittels der Lenkzeiterfassungseinheit zu erfassen.

Die Steuervorrichtung kann ausgebildet sein, ein Ansteuersignal an die Bedienschnittstelle zu senden, um eine Abfrage an den Nutzer, das Bevorstehen einer Nicht-Fahrbetriebs-Nutzungssituation zu bestätigen, auszugeben. Die Steuervorrichtung kann ferner ausgebildet sein, ein Bestätigungssignal von der Bedienschnittstelle zu empfangen, dass der Nutzer das Bevorstehen einer Nicht-Fahrbetriebs-Nutzungssituation bestätigt hat.

Die Steuervorrichtung kann ferner ausgebildet sein, ein Ansteuersignal an das elektrische Schaltelement, mittels dessen die Verbraucher der ersten Verbrauchergruppe selektiv elektrisch aktiviert werden können, zu senden, um das elektrische Schaltelement zu öffnen oder zu schließen. Alternativ kann die Steuervorrichtung ausgebildet sein, das Aufwach-Signal über den Datenbus an die elektrischen Verbraucher der ersten Verbrauchergruppe zu senden.

Gemäß einem weiteren allgemeinen Aspekt der Erfindung wird ein Kraftfahrzeug, vorzugsweise ein Nutzfahrzeug, bereitgestellt, das eine Steuervorrichtung wie hierin offenbart aufweist. Das Nutzfahrzeug ist ein Fahrzeug, das durch seine Bauart und Einrichtung zur Beförderung von Personen, zum Transport von Gütern oder zum Ziehen von Anhängerfahrzeugen ausgelegt ist.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer beispielhaften Anordnung zur Energieversorgung elektrischer Verbraucher, umfassend eine Steuervorrichtung gemäß einer Ausführungsform;
- Figur 2: eine schematische Darstellung eines Verfahrens gemäß einer ersten Ausführungsform; und
- Figur 3: eine schematische Darstellung des Verfahrens gemäß einer zweiten Ausführungsform.

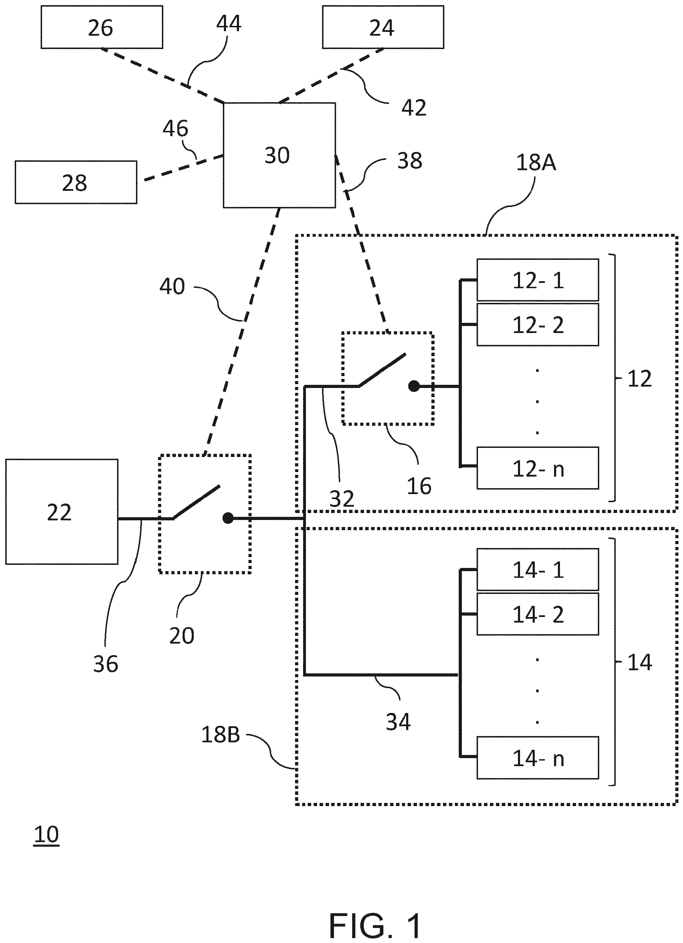

Figur 1 zeigt eine beispielhafte Anordnung 10 zur Energieversorgung elektrischer Verbraucher in einem Kraftfahrzeug.

Die Anordnung 10 umfasst eine elektrische Spannungs- bzw. Stromquelle 22, beispielsweise eine Fahrzeugbatterie, die u.a. über eine elektrische Leitung 36 mit einem Bordnetz eines Fahrzeugs elektrisch verbindbar ist. Zur Herstellung der elektrischen Verbindung ist in der elektrischen Leitung 36 eine Klemme-15 20 angeordnet, welche durch Einschalten der Zündung, z. B. durch Drehen eines Zündschlüssels in einem Zündschloss, geschlossen werden kann.

Die elektrische Leitung 36 verzweigt in eine elektrische Leitung 32 eines ersten Teilbordnetzes 18A und in eine elektrische Leitung 34 eines zweiten Teilbordnetzes 18B.

Im ersten Teilbordnetz 18A ist eine erste Verbrauchergruppe 12 angeordnet, bestehend aus Verbrauchern 12-1, 12-2,..., 12-n, die für einen Fahrbetrieb des Kraftfahrzeugs erforderlich und für einen Nicht-Fahrbetrieb des Kraftfahrzeugs nicht erforderlich sind.

Im zweiten Teilbordnetz 18B ist eine zweite Verbrauchergruppe 14 angeordnet, bestehend aus Verbrauchern 14-1, 14-2,..., 14-n, die im Rahmen eines Aufenthalts im Kraftfahrzeug während eines Nicht-Fahrbetriebs des Kraftfahrzeugs genutzt werden können. Das erste Teilbordnetz 18A zeichnet sich dadurch aus, dass in der elektrischen Verbindung 32 zusätzlich ein elektrisches Schaltelement 16 angeordnet ist. Alternativ kann für jeden der Verbraucher 14-1, 14-2,..., 14-n jeweils ein elektrisches Schaltelement angeordnet sein.

Eine Standorterfassungseinheit 24 ist dazu ausgebildet, einen aktuellen Standort des Kraftfahrzeugs zu erfassen und zu prüfen, ob der erfasste Standort einer für eine Nicht-Fahrbetriebs-Nutzungssituation geeigneten Standortkategorie entspricht, beispielsweise eine Raststätte oder ein Parkplatz.

Eine Lenkzeiterfassungseinheit 26 ist dazu ausgebildet, eine Lenkzeit zu erfassen und zu prüfen, ob in Abhängigkeit der zurückliegenden Lenkzeiten eine Ruhezeit des Fahrers wahrscheinlich ist.

Eine Bedienschnittstelle 28, umfassend eine Anzeige- und Eingabeeinheit, ist dazu ausgebildet, eine Benutzer-Interaktion zu erfassen, wobei ein Nutzer mittels einer Bedieneingabe bestätigen kann, dass eine Nicht-Fahrbetriebs-Nutzungssituation des Kraftfahrzeugs bevorsteht. Die Benutzer-Interaktion kann eine akustische und/oder visuelle Ausgabe einer Anfrage umfassen.

Eine Steuervorrichtung 30 ist programmtechnisch dazu ausgebildet, das erfindungsgemäße Verfahren durchzuführen. Dazu ist die Steuervorrichtung 30 über Signalverbindungen oder Stromleitungen 38, 40, 42, 44 und 46 mit der Klemme-15 20, dem elektrischen Schaltelement 16, der Standorterfassungseinheit 24, der Lenkzeiterfassungseinheit 26 und der Bedienschnittstelle 28 verbunden. Alternativ kann die Standorterfassungseinheit 24 und/oder die Lenkzeiterfassungseinheit 26 Teil der Steuervorrichtung 30 sein.

Zur Durchführung des erfindungsgemäßen Verfahrens ist die Steuervorrichtung 30 dazu ausgebildet, über die Signalverbindung 40 ein Betriebssignal, das eine bevorstehende Nutzung des Kraftfahrzeugs signalisiert, zu erfassen. Das Betriebssignal kann ein Klemme-15-Signal der Klemme-15 20 sein. Ferner ist die Steuervorrichtung 30 dazu ausgebildet, mittels der Standorterfassungseinheit 24, der Lenkzeiterfassungseinheit 26 und der Bedienschnittstelle 28 zu erkennen, ob eine Fahrbetriebs-Nutzungssituation oder eine Nicht-Fahrbetriebs-Nutzungssituation des Kraftfahrzeugs, bei der das Kraftfahrzeug im Nicht-Fahrbetrieb zum Aufenthalt genutzt wird, bevorsteht. Falls eine Fahrbetriebs-Nutzungssituation erkannt wird, so kann die Steuervorrichtung 30 den elektrischen Schalter 16 über die Signalverbindung 38 veranlassen, zu schließen und so die Verbraucher 12-1, 12-2,...,12-n der ersten Verbrauchergruppe 12 elektrisch aktivieren, d.h. diese Verbraucher 12-1, 12-2,...,12-n mit elektrischem Strom zu versorgen.

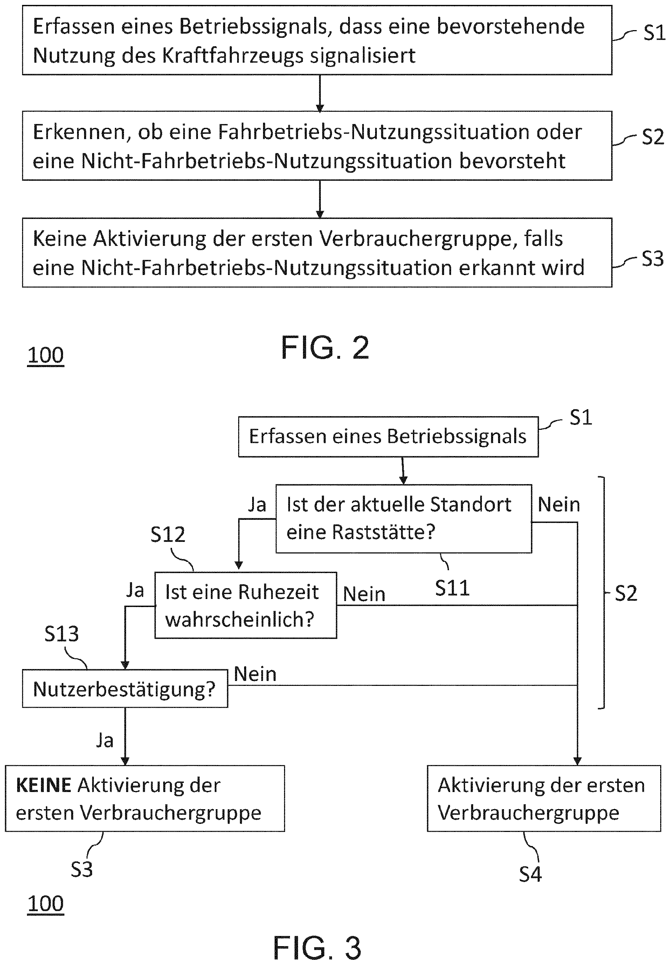

Figur 2 stellt schematisch das Verfahren gemäß einer ersten Ausführungsform dar.

In Schritt S1 wird ein Betriebssignal, das eine bevorstehende Nutzung des Kraftfahrzeugs signalisiert, erfasst. In Schritt S2 wird erkannt, ob eine Fahrbetriebs-Nutzungssituation oder eine Nicht-Fahrbetriebs-Nutzungssituation des Kraftfahrzeugs, bei der das Kraftfahrzeug im Nicht-Fahrbetrieb zum Aufenthalt genutzt wird, bevorsteht. Falls eine Nicht-Fahrbetriebs-Nutzungssituation erkannt wird, so erfolgt in Schritt S3 keine elektrische Aktivierung der Verbraucher der ersten Verbrauchergruppe.

Der in Figur 3 dargestellte Verfahrensablauf gemäß einer zweiten Ausführungsform unterscheidet sich von dem Verfahren gemäß der ersten Ausführungsform insbesondere durch explizite Zwischenschritte S11, S12 und S13 des Schrittes S2, wobei ferner die möglichen Entscheidungen der Schritte bzw. Zwischenschritte angezeigt sind.

Wie zuvor wird in Schritt S1 ein Betriebssignal, das eine bevorstehende Nutzung des Kraftfahrzeugs signalisiert, erfasst. Wird kein Betriebssignal erfasst, so erfolgt gemäß Schritt S4 eine Aktivierung der ersten Verbrauchergruppe 12. Wird ein Betriebssignal erfasst, so folgt Schritt S2, der drei Teilschritte S11, S12 und S13 umfasst.

In Teilschritt S11 wird ein aktueller Standort des Kraftfahrzeugs erfasst und geprüft, ob der erfasste Standort einer für eine Nicht-Fahrbetriebs-Nutzungssituation geeigneten Standortkategorie entspricht, das Fahrzeug sich also beispielsweise auf einer Raststätte befindet. Wird ein für eine Nicht-Fahrbetriebs-Nutzungssituation geeigneter Standort festgestellt, so folgt Teilschritt S12, andernfalls erfolgt eine Aktivierung der ersten Verbrauchergruppe 12 gemäß Schritt S4.

In Teilschritt S12 wird geprüft, ob in Abhängigkeit der zurückliegenden Lenkzeiten eine Ruhezeit des Fahrers wahrscheinlich ist. Dies kann der Fall sein, wenn eine ermittelte Lenkzeit einen vorgegebenen Grenzwert überschritten hat. Ist die Ruhezeit des Fahrers wahrscheinlich, so folgt Teilschritt S13, andernfalls erfolgt eine Aktivierung der ersten Verbrauchergruppe 12 gemäß Schritt S4.

In Teilschritt S13 ist durch den Nutzer zu bestätigen, dass eine Nicht-Fahrbetriebs-Nutzungssituation des Kraftfahrzeugs bevorsteht, wobei dies durch eine Benutzer-Interaktion über die Bedienschnittstelle 28 erfolgt. Die Benutzer-Interaktion kann eine akustische und/oder visuelle Ausgabe einer Abfrage umfassen.

Schritt S2 kann alternativ einen oder mehrere der Teilschritte S11, S12 und S13 in beliebiger Reihenfolge umfassen.

Erfolgt keine Bestätigung durch den Nutzer, so erfolgt eine Aktivierung der ersten Verbrauchergruppe 12 gemäß Schritt S4. Sind sämtliche Bedingungen der Nicht-Fahrbetriebs-Nutzungssituation des Kraftfahrzeugs gemäß der Teilschritte S1, S12, S13 erfüllt, so erfolgt in Schritt S3 keine elektrische Aktivierung der Verbraucher der ersten Verbrauchergruppe 12. Die Erfindung ist nicht auf die vorstehend beschriebenen bevorzugten Ausführungsformen beschränkt.

### Bezugszeichenliste

- 10: Anordnung zur Energieversorgung elektrischer Verbraucher
- 12: Erste Verbrauchergruppe
- 12-1, 12-2,...,12-n: Verbraucher der ersten Verbrauchergruppe
- 14: Zweite Verbrauchergruppe
- 14-1, 14-2,...,14-n: Verbraucher der zweiten Verbrauchergruppe
- 16: Elektrisches Schaltelement
- 18A: Erstes Teilbordnetz
- 18B: Zweites Teilbordnetz
- 20: Klemme-15
- 22: Elektrische Stromquelle
- 24: Standorterfassungseinheit
- 26: Lenkzeiterfassungseinheit
- 28: Bedienschnittstelle
- 30: Steuervorrichtung
- 32, 34, 36: Elektrische Leitung
- 38, 40, 42, 44, 46: Signalverbindung

## Patentansprüche

1. Verfahren zur Reduzierung von Betriebsstunden von elektrischen Verbrauchern (12-1, 12-2, 12-n, 14-1, 14-2, 14-n) eines Bordnetzes eines Kraftfahrzeugs, vorzugsweise Nutzfahrzeugs,
wobei die elektrischen Verbraucher (12-1, 12-2, 12-n, 14-1, 14-2,..., 14-n) unterteilt sind in zumindest eine erste Verbrauchergruppe (12), die für einen Fahrbetrieb des Kraftfahrzeugs erforderlich und für einen Nicht-Fahrbetrieb des Kraftfahrzeugs nicht erforderlich sind, und eine zweite Verbrauchergruppe (14), die Verbraucher enthält, die im Rahmen eines Aufenthalts im Kraftfahrzeug während eines Nicht-Fahrbetriebs des Kraftfahrzeugs genutzt werden können, umfassend die Schritte:
a) Erfassen (S1) eines Betriebssignals, das eine bevorstehende Nutzung des Kraftfahrzeugs signalisiert;
b) Erkennen (S2), ob eine Fahrbetriebs-Nutzungssituation oder eine Nicht-Fahrbetriebs-Nutzungssituation des Kraftfahrzeugs, bei der das Kraftfahrzeug im Nicht-Fahrbetrieb zum Aufenthalt genutzt wird, bevorsteht; und
c) Falls eine Nicht-Fahrbetriebs-Nutzungssituation erkannt wird, keine elektrische Aktivierung (S3) der Verbraucher (12-1, 12-2, 12-n) der ersten Verbrauchergruppe (12).

2. Verfahren nach Anspruch 1, wobei das Betriebssignal ein Klemme-15-Signal, ein "Zündung ein"-Signal oder das Anlasssignal bei einem Elektrofahrzeug ist.

3. Verfahren nach Anspruch 1 oder 2, wobei das Erkennen (S2), ob eine Nicht-Fahrbetriebs-Nutzungssituation des Kraftfahrzeugs bevorsteht, eine Benutzer-Interaktion (S13) über eine Bedienschnittstelle (28) des Kraftfahrzeugs umfasst, wobei ein Nutzer mittels einer Bedieneingabe bestätigen kann, dass eine Nicht-Fahrbetriebs-Nutzungssituation des Kraftfahrzeugs vorliegt.

4. Verfahren nach Anspruch 3, wobei die Benutzer-Interaktion eine akustische und/oder visuelle Ausgabe einer Abfrage umfasst, das Bevorstehen einer Nicht-Fahrbetriebs-Nutzungssituation zu bestätigen.

5. Verfahren nach einem der vorherigen Ansprüchen, wobei das Erkennen (S2), ob eine Fahrbetriebs-Nutzungssituation oder eine Nicht-Fahrbetriebs-Nutzungssituation des Kraftfahrzeugs bevorsteht, umfasst:
a) Erfassen eines aktuellen Standorts des Kraftfahrzeugs und Prüfen (S11), ob der erfasste Standort einer für eine Nicht-Fahrbetriebs-Nutzungssituation geeigneten Standortkategorie entspricht, beispielsweise eine Raststätte oder ein Parkplatz; und/oder
b) Prüfen (S12), ob in Abhängigkeit der zurückliegenden Lenkzeiten eine Ruhezeit des Fahrers wahrscheinlich ist.

6. Verfahren nach den Anspruch 5, wenn abhängig von Anspruch 3 oder 4, wobei die Benutzer-Interaktion (S13) durchgeführt wird, falls die Prüfung ergeben hat, dass der Standort einer für eine Nicht-Fahrbetriebs-Nutzungssituation geeigneten Standortkategorie entspricht und/oder dass eine Ruhezeit des Fahrers wahrscheinlich ist.

7. Verfahren nach einem der vorherigen Ansprüchen, ferner umfassend:
eine elektrische Aktivierung (S4) der Verbraucher (12-1, 12-2, 12-n) der ersten Verbrauchergruppe (12), falls eine Fahrbetriebs-Nutzungssituation erkannt wird, wobei die elektrische Aktivierung
a) mittels eines elektrische Schaltelements (16) erfolgt, das ein elektrisches Teilbordnetz, (18A) in dem die erste Verbrauchergruppe (12) angeordnet ist, mit elektrischem Strom versorgt; oder
b) mittels eines über einen Datenbus gesendeten Aufwach-Signals (engl. CAN-Wakeup-Signal) erfolgt.

8. Verfahren nach einem der vorhergehenden Ansprüche,
a) wobei die erste Verbrauchergruppe (12) verkehrssicherheitsrelevante Verbraucher, beispielsweise ein Notbremssystem, und Sensorelemente von Fahrerassistenzsystemen umfasst, beispielsweise Sensoren zur Umfelderfassung; und/oder
b) wobei die zweite Verbrauchergruppe (14) das Fahrzeugentertainment, einen Anzeigebildschirm, und/oder eine Innenbeleuchtung umfasst.

9. Verfahren nach einem der vorhergehenden Ansprüche, ferner umfassend:
Bestimmen der Gesamtbetriebsstunden der elektrischen Verbraucher (12-1, 12-2, 12-n, 14-1, 14-2, 14-n) und Erfassen einer Anzahl der Aktivierungs- und Deaktivierungsvorgänge der elektrischen Verbraucher (12-1, 12-2, 12-n, 14-1, 14-2, 14-n) zur Bestimmung einer Abschätzung zur verbleibenden Lebensdauer für jedes der elektrischen Verbraucher (12-1, 12-2, 12-n, 14-1, 14-2, 14-n).

10. Steuervorrichtung (30) zur Reduzierung von Betriebsstunden von elektrischen Verbrauchern (12-1, 12-2, 12-n, 14-1, 14-2, 14-n) eines Bordnetzes eines Kraftfahrzeugs, die ausgebildet ist, das Verfahren gemäß einem der Ansprüche 1 bis 9 durchzuführen.

11. Kraftfahrzeug, vorzugsweise Nutzfahrzeug, aufweisend eine Steuervorrichtung (30) nach Anspruch 10.

## Claims

1. Method for reducing the operating hours of electrical loads (12-1, 12-2, 12-n, 14-1, 14-2, 14-n) of an on-board network of a motor vehicle, preferably a commercial vehicle,
wherein the electrical loads (12-1, 12-2, 12-n, 14-1, 14-2, ..., 14-n) being subdivided into at least a first load group (12), which is required for a driving operation of the motor vehicle and is not required for a non-driving operation of the motor vehicle, and a second load group (14), which comprises loads which can be used during a stay in the motor vehicle during a non-driving operation of the motor vehicle, the method comprising the steps:
a) detecting (S1) an operating signal signalling an imminent use of the motor vehicle;
b) detecting (S2) whether a driving use situation or a non-driving use situation of the motor vehicle, in which the motor vehicle is used in non-driving mode for stay, is imminent; and
c) if a non-driving use situation is detected, no electrical activation (S3) of the loads (12-1, 12-2, 12-n) of the first load group (12).

2. The method according to claim 1, wherein the operating signal is a terminal-15 signal, an "ignition on" signal or the starting signal of an electric vehicle.

3. A method according to claim 1 or 2, wherein detecting (S2) whether a non-driving use situation of the motor vehicle is imminent comprises a user interaction (S13) via an operator interface (28) of the motor vehicle, wherein a user can confirm by means of an operator input that a non-driving use situation of the motor vehicle is present.

4. A method according to claim 3, wherein the user interaction comprises an audible and/or visual output of a request to confirm the presence of a non-driving use situation.

5. A method according to any one of the preceding claims, wherein detecting (S2) whether a driving use situation or a non-driving use situation of the motor vehicle is imminent, comprises:
a) detecting a current location of the motor vehicle and checking (S11) whether the detected location corresponds to a location category suitable for a non-driving use situation, for example a service area or a parking area; and/or
b) checking (S12) whether, depending on the past driving times, a rest period for the driver is likely.

6. A method according to claim 5, if dependent on claim 3 or 4, wherein the user interaction (S13) is performed if the check has shown that the location corresponds to a location category suitable for a non-driving use situation and/or that a driver rest period is likely.

7. A method according to any one of the preceding claims, further comprising:
an electrical activation (S4) of the loads (12-1, 12-2, 12-n) of the first load group (12) if a driving use situation is detected, wherein the electrical activation is performed
a) by means of an electrical switching element (16) which supplies electrical current to an electrical sub-network (18A) in which the first load group (12) is arranged; or
b) by means of a CAN wake-up signal transmitted via a data bus.

8. Method according to one of the preceding claims,
a) wherein the first load group (12) comprises traffic safety relevant loads, for example an emergency braking system, and sensor elements of driver assistance systems, for example sensors for environment detection; and/or
b) wherein the second load group (14) comprises the vehicle entertainment, a display screen, and/or interior lighting.

9. A method according to any one of the preceding claims, further comprising:
determining the total hours of operation of the electrical loads (12-1, 12-2, 12-n, 14-1, 14-2, 14-n) and detecting a number of activation and deactivation events of the electrical loads (12-1, 12-2, 12-n, 14-1, 14-2, 14-n) to determine an estimate of remaining life for each of the electrical loads (12-1, 12-2, 12-n, 14-1, 14-2, 14-n).

10. Control device (30) for reducing operating hours of electrical consumers (12-1, 12-2, 12-n, 14-1, 14-2, 14-n) of an on-board network of a motor vehicle, which is configured to carry out the method according to one of claims 1 to 9.

11. A motor vehicle, preferably a commercial vehicle, comprising a control device (30) according to claim 10.

## Revendications

1. Procédé permettant de réduire les heures de fonctionnement des consommateurs électriques (12-1, 12-2, 12-n, 14-1, 14-2, 14-n) d'un réseau de bord d'un véhicule automobile, de préférence d'un véhicule utilitaire,
dans lequel les consommateurs électriques (12-1, 12-2, 12-n, 14-1, 14-2, ..., 14-n) sont répartis en au moins un premier groupe de consommateurs (12) qui sont nécessaires à un fonctionnement de conduite du véhicule automobile et ne sont pas nécessaires à un fonctionnement hors conduite du véhicule automobile, et en un deuxième groupe de consommateurs (14) qui comporte des consommateurs qui peuvent être utilisés dans le cadre d'un séjour dans le véhicule automobile pendant un fonctionnement hors conduite du véhicule automobile, comprenant les étapes consistant à :
a) détecter (S1) un signal de fonctionnement qui signale une utilisation imminente du véhicule automobile ;
b) identifier (S2) si une situation d'utilisation de fonctionnement de conduite ou une situation d'utilisation de fonctionnement hors conduite du véhicule automobile dans laquelle le véhicule automobile est utilisé en fonctionnement hors conduite pour le séjour est imminente ; et
c) si une situation d'utilisation de fonctionnement hors conduite est identifiée, ne pas activer électriquement (S3) les consommateurs (12-1, 12-2, 12-n) du premier groupe de consommateurs (12).

2. Procédé selon la revendication 1, dans lequel le signal de fonctionnement est un signal de borne 15, un signal « allumage activé » ou le signal de démarrage sur un véhicule électrique.

3. Procédé selon la revendication 1 ou 2, dans lequel l'identification (S2) si une situation d'utilisation de fonctionnement hors conduite du véhicule automobile est imminente comprend une interaction utilisateur (S13) par l'intermédiaire d'une interface utilisateur (28) du véhicule automobile, dans lequel un utilisateur peut confirmer au moyen d'une entrée de commande qu'une situation d'utilisation de fonctionnement hors conduite du véhicule automobile est présente.

4. Procédé selon la revendication 3, dans lequel l'interaction utilisateur comprend une sortie acoustique et/ou visuelle d'une demande de confirmer l'imminence d'une situation d'utilisation de fonctionnement hors conduite.

5. Procédé selon l'une quelconque des revendications précédentes, dans lequel l'identification (S2) si une situation d'utilisation de fonctionnement de conduite ou une situation d'utilisation de fonctionnement hors conduite du véhicule automobile est imminente comprend les étapes consistant à :
a) détecter un emplacement actuel du véhicule automobile et vérifier (S11) si l'emplacement détecté correspond à une catégorie d'emplacements adaptée à une situation d'utilisation de fonctionnement hors conduite, par exemple une aire de repos ou un parking ; et/ou
b) vérifier (S12) si un temps de repos du conducteur est vraisemblable en fonction des durées de conduite passées.

6. Procédé selon la revendication 5 lorsqu'elle dépend de la revendication 3 ou 4, dans lequel l'interaction utilisateur (S13) est effectuée si le résultat de la vérification est que l'emplacement correspond à une catégorie d'emplacements adaptée à une situation d'utilisation de fonctionnement hors conduite, et/ou qu'un temps de repos du conducteur est vraisemblable.

7. Procédé selon l'une quelconque des revendications précédentes, comprenant en outre :
une activation électrique (S4) des consommateurs (12-1, 12-2, 12-n) du premier groupe de consommateurs (12) si une situation d'utilisation de fonctionnement de conduite est identifiée, dans lequel l'activation électrique est effectuée
a) au moyen d'un élément de commutation électrique (16) qui alimente en courant électrique un réseau de bord partiel (18A) dans lequel est disposé le premier groupe de consommateurs (12) ; ou
b) au moyen d'un signal de réveil (en anglais « CAN wake-up signal ») .

8. Procédé selon l'une quelconque des revendications précédentes,
a) dans lequel le premier groupe de consommateurs (12) comprend des consommateurs pertinents pour la sécurité routière, par exemple un système de freinage d'urgence, et des éléments de capteur de systèmes d'assistance au conducteur, par exemple des capteurs pour détecter l'entourage ; et/ou
b) dans lequel le deuxième groupe de consommateurs (14) comprend le système de divertissement du véhicule, un écran d'affichage et/ou un éclairage intérieur.

9. Procédé selon l'une quelconque des revendications précédentes, comprenant en outre l'étape consistant à :
déterminer les heures de fonctionnement totales des consommateurs électriques (12-1, 12-2, 12-n, 14-1, 14-2, 14-n) et détecter un nombre des opérations d'activation et de désactivation des consommateurs électriques (12-1, 12-2, 12-n, 14-1, 14-2, 14-n) afin de déterminer une estimation de la durée de vie restante pour chacun des consommateurs électriques (12-1, 12-2, 12-n, 14-1, 14-2, 14-n).

10. Dispositif de commande (30) permettant de réduire les heures de fonctionnement des consommateurs électriques (12-1, 12-2, 12-n, 14-1, 14-2, 14-n) d'un réseau de bord d'un véhicule automobile qui est réalisé pour exécuter le procédé selon l'une quelconque des revendications 1 à 9.

11. Véhicule automobile, de préférence véhicule utilitaire, présentant un dispositif de commande (30) selon la revendication 10.
